# EUROPÄISCHE PATENTSCHRIFT

(11) **EP 4 119 368 B1**
(45) Veröffentlichungstag und Bekanntmachung des Hinweises auf die Patenterteilung: **31.01.2024**
(21) Anmeldenummer: 22183944.2
(22) Anmeldetag: 08.07.2022
(51) Int. Cl.: B60G 7/00, F16F 1/38, F16C 17/00, F16C 11/06, F16C 23/04, F16C 27/02, F16C 43/02, F16C 35/02, F16F 1/393

(54) **GELENKLAGER FÜR DIE ABSTÜTZUNG EINES FAHRZEUG-LENKERARMS**
PIVOT BEARING FOR SUPPORTING A VEHICLE SUSPENSION ARM
PALIER DE PIVOTEMENT POUR LE SUPPORT D'UN BRAS DE SUSPENSION DE VÉHICULE

(30) Priorität: 15.07.2021 DE 102021118344
(43) Veröffentlichungstag der Anmeldung: 18.01.2023
(73) Patentinhaber: BHC GUMMI-METALL GMBH, 53340 Meckenheim (DE)
(72) Erfinder: Manke, Marcel, 53359 Rheinbach (DE)
(74) Vertreter: Janke Scholl Patentanwälte PartG mbB

(56) Entgegenhaltungen:
- EP-A1- 1 612 066
- DE-A1- 4 222 803
- DE-A1-102014 112 181
- DE-A1-102017 211 733
- US-A1- 2014 016 888

## Beschreibung

Die Erfindung betrifft ein Gelenklager für die Abstützung eines Fahrzeugs-Lenkerarms. Derartige Gelenklager sind in der Fahrzeugtechnik als Elemente von Fahrzeugfahrwerken weit verbreitet und z. B. aus der EP 2 259 935 B1, der DE 21 08 154 A, der DE 10 2014 112 181 A1, der DE 42 22 803 A1, der DE 10 2017 211733 A1 und der EP 1 612 066 A1 bekannt. Sie bilden eine gelenkige Befestigung zur Bewegungsübertragung oder zur Abstützung, wobei sie eine Beweglichkeit mit mehr als einem Freiheitsgrad erlauben. Sie eignen sich z. B. zum Einsatz an den Enden eines Fahrzeug-Lenkerarms, etwa für den chassisfesten Anlenkpunkt oder den fahrgestellseitigen Anlenkpunkt eines stabilisierenden Lenkerarms. Der Fahrzeug-Lenkerarm kann aber auch z. B. ein zwischen zwei Gelenkpunkten angeordneter Stoßdämpfer sein.

Die DE 10 2014 112 181 A1 offenbart ein Gelenklager für die Abstützung eines Fahrzeug-Lenkerarms, mit einem Elastomerlager aus einem starren Zentralelement, welches einstückig aus einem Gelenkkern und mindestens einem in Verlängerung der Längsachse des Gelenkkerns angeordneten Befestigungszapfen besteht, einer den Gelenkkern umschließenden und unmittelbar gegen den Gelenkkern abgestützten Elastomerschicht, und einer die Elastomerschicht umschließenden Schale.

Diese Gelenklager sind oft Gummi-Metall-Konstruktionen und setzen sich in diesem Fall aus einem ballig geformten, massivem Gelenkkern, einem dem Gelenkkern über dessen Umfang umschließenden Gelenkgehäuse sowie einer ringförmigen Elastomerschicht zwischen Gelenkkern und Gelenkgehäuse zusammen. Für ein optimales Verformungsverhalten mit Rückstellcharakteristik weist der Elastomereinsatz auf seiner Längsmitte seinen größten Durchmesser auf, der sich zu den beiden Seiten hin verjüngt. Entsprechend verjüngend ist auch die Innenseite des Gelenkgehäuses gestaltet.

Im Fahrbetrieb können, vor allem nach engen Kurvenfahrten, anderen starken Auslenkungen oder Stößen die in der Elastomerschicht durch deren elastische Verformung wirkenden Rückstellmomente so hoch sein, dass die an dem Gelenklager anknüpfenden Fahrwerksteile wie z.B. die längsgeführten Kolbenstangen von Stoßdämpfern durch vor allem Biegekräfte stark belastet werden, und sie so im Laufe der Zeit Schädigungen aufweisen können.

Ziel der Erfindung ist daher die Schaffung eines Gelenklagers für die Abstützung eines Fahrzeug-Lenkerarms, bei dem die an dem Gelenklager anknüpfenden Fahrwerksteile weniger stark durch die dem Gelenklager immanenten Rückstellmomente belastet werden, und daher die Gefahr von mit der Zeit einsetzenden Schädigungen reduziert wird.

Zur Lösung dieser Aufgabe vorgeschlagen wird ein Gelenklager mit den Merkmalen des Patentanspruchs 1.

Bestandteil dieses Gelenklagers ist unter anderem ein Elastomerlager aus einem starren Zentralelement, welches aus einem Gelenkkern und mindestens einem in Verlängerung der Längsachse des Gelenkerns angeordneten Befestigungszapfen besteht, einer den Gelenkarm umschließenden und unmittelbar gegen den Gelenkkern abgestützten Elastomerschicht, und einer die Elastomerschicht umschließenden Schale. Bestandteil des Gelenklagers ist ferner ein Gleitlager aus einer sphärischen Kalotte, welche ringförmig mit einer Durchgangsöffnung ausgebildet ist, und einem Außenring, welcher an seiner Innenseite als eine die Kalotte frei drehbar aufnehmende, sphärische Gleitlagerschale ausgebildet ist. Die Schale des Elastomerlagers ist mit ihrer Außenseite in der Durchgangsöffnung der Kalotte befestigt, und die Außenseite des Außenrings ist als eine in den Fahrzeug-Lenkerarm einsetzbare Montagefläche ausgebildet.

Ein solches Gelenklager verknüpft die Vorteile eines sich rückstellenden Elastomerlagers mit den Vorteilen eines von Rückstellkräften weitgehend freien, kardanischen Lagers. Geschaffen wird insgesamt ein Gelenklager, bei dem die an dem Gelenklager anknüpfenden Fahrwerksteile weniger stark durch die dem Gelenklager immanenten Rückstellmomente belastet werden, so dass die Gefahr von mit der Zeit einsetzenden Schädigungen reduziert wird.

Vorteilhafte Ausgestaltungen des Gelenklagers sind in den Unteransprüchen angegeben.

Von Vorteil kann insbesondere sein, wenn die Längsachse des Gelenkkerns durch den Radienmittelpunkt der sphärischen Kalotte führt, und/oder wenn die Öffnungsachse der Durchgangsöffnung der Kalotte durch den Radienmittelpunkt der Kalotte führt.

Vorteilhaft kann ferner sein, wenn das den Gelenkkern beinhaltende Zentralelement durch Öffnungen in den beiden Stirnseiten des Außenrings hindurchführt, und wenn die Öffnungskontur zumindest einer der Öffnungen segmentiert ausgebildet ist, wobei die Öffnungskontur auf zwei einander gegenüberliegenden Segmenten einen ersten Öffnungsradius und auf den dazwischen angeordneten Segmenten einen demgegenüber größeren, zweiten Öffnungsradius aufweist. Dies ermöglicht trotz der sphärischen bzw. kalottenförmigen Bauweise eine einfache Montage der sphärischen Kalotte in der umgebenden sphärischen Gleitlagerschale des Außenrings. Hierzu wird die sphärisch sowie zugleich ringförmig gestaltete Kalotte zunächst um 90° verdreht bis in das Zentrum des Außenrings hineingeschoben, und anschließend werden die beiden Achsen durch Zurückdrehen der Kalotte wieder zueinander ausgerichtet. Ist diese Montage der Kalotte durch Einsetzen in den Außenring abgeschlossen und wurde anschließend das Elastomerlager fest in der Durchgangsöffnung der Kalotte platziert, so ist ein anschließendes voneinander Lösen der sphärischen Bauteile nicht mehr möglich, da diese ineinander gefangen sind.

Hierbei ist von zusätzlichem Vorteil, wenn der zweite Öffnungsradius an dem Außenring gleich oder größer als der Radius der Kalotte ist und der erste Öffnungsradius an dem Außenring geringer als der Radius der Kalotte ist. Von Vorteil ist ferner, wenn der erste Öffnungsradius größer als die Hälfte des maximalen Durchmessers der die Elastomerschicht umschließenden Schale ist.

Vorzugsweise ist die die Elastomerschicht umschließende Schale als ein Gehäuse ausgebildet, welches aus einem Gehäusemantel, an dem sich die Außenseite befindet, und aus in Richtung der Längsachse weisenden Stirnwänden an beiden Enden des Gehäusemantels besteht. Hierbei kann vorgesehen sein, dass die als Gehäuse ausgebildete Schale einschließlich ihrer beiden Stirnwände einstückig ausgebildet ist.

Weitere Einzelheiten und Vorteile ergeben sich aus der nachfolgenden Beschreibung eines Ausführungsbeispiels und unter Bezugnahme auf die zugehörigen Zeichnungen. Darin zeigen:
- Fig. 1: Das in einer Öffnung eines Fahrzeug-Lenkerarms eingesetzte Gelenklager in einem teilweisen Längsschnitt;
- Fig. 2: einen teilweisen Längsschnitt durch das Gelenklager, wobei dessen innere Bestandteile in einer Ansicht, und dessen äußere Bestandteile in einem Schnitt wiedergegeben sind;
- Fig. 3: das Gelenklager perspektivisch;
- Fig. 4: die äußeren Bestandteile des Gelenklagers in einer nur vorläufigen Montageposition;
- Fig. 5: ebenfalls die äußeren Bestandteile des Gelenklagers in einer noch nicht montierten Stellung zueinander;

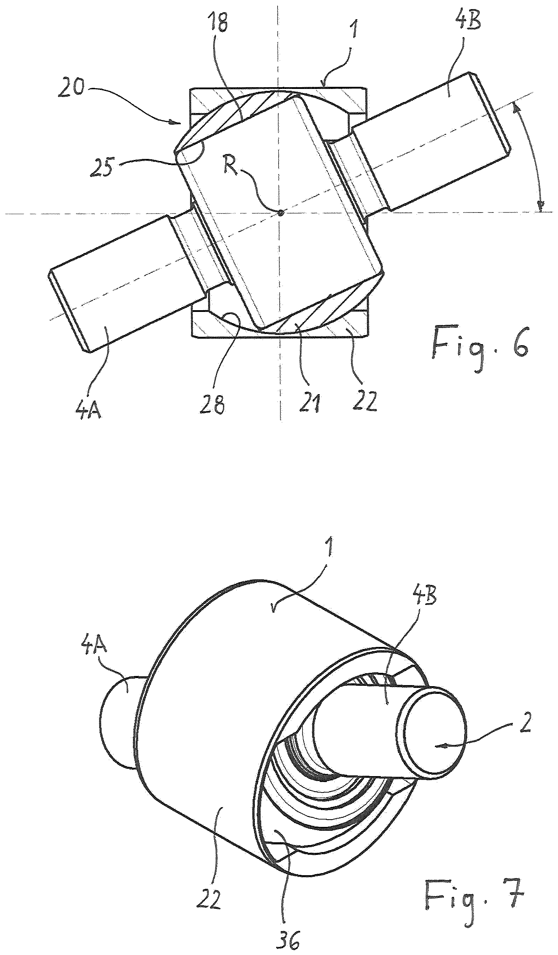

- Fig. 6: eine der Fig. 2 entsprechende Darstellung, hier allerdings im Falle der Auslenkung des Gelenklagers;
- Fig. 7: eine der Fig. 3 entsprechende Darstellung, hier in der ausgelenkten Situation.

Das auf den Zeichnungen dargestellte Gelenklager ist radial außen mit einer zylindrischen Außenseite 1 versehen, so dass sich das Gelenklager in eine entsprechend gestaltete Öffnung einpressen lässt, z. B. in eine entsprechend große Bohrung 1 A in einem Fahrzeug-Lenkerarm 3 eines Straßen- oder Schienenfahrzeugs. Das Gelenklager bildet eine gelenkige Befestigung zur Bewegungsübertragung oder zur Abstützung, und erlaubt eine Beweglichkeit mit mehr als einem Freiheitsgrad. Es eignet sich z. B. zum Einsatz an den Enden des Fahrzeug-Lenkerarms 3, etwa für den chassisfesten Anlenkpunkt oder den fahrgestellseitigen Anlenkpunkt eines stabilisierenden Lenkerarms. Der Fahrzeug-Lenkerarm 3 kann auch z. B. ein zwischen zwei Gelenkpunkten angeordneter Stoßdämpfer sein.

Das Zentrum des Gelenklagers bildet ein einstückig und vorzugsweise als Schmiedeteil gestaltetes Zentralelement 2, welches hier aus drei Segmenten besteht. Das innere Segment des Zentralelements 2 ist ein massiver Gelenkkern 5, welcher ballig gestaltet ist, vorzugsweise mit einer sphärischen Außenfläche. Die Außenfläche kann auch eine von der Kreisform abweichende, ballige Kontur aufweisen, z. B. oval oder elliptisch sein.

Zur Verbindung z. B. mit einem beliebig ausgestalteten Fahrwerksteil 3 des Fahrzeugs und insbesondere mit einem Fahrzeug-Lenkerarm sind an dem Gelenkkern 5 zu beiden Enden hin Befestigungszapfen 4A, 4B einstückig angeformt. Je nach den vorhandenen Anschlussmöglichkeiten können die Befestigungszapfen 4A, 4B zylindrisch sein, mit einem Außengewinde versehen sein oder einen anderen, z. B. einen rechteckigen Querschnitt aufweisen. Abhängig von der konkreten Belastungssituation kann auch ein nur einseitig vorhandener Befestigungszapfen ausreichend sein, also nur der Befestigungszapfen 4A oder nur der Befestigungszapfen 4B.

Hergestellt ist das Zentralelement 2 einschließlich des Gelenkkerns 5 und der Befestigungszapfen 4A, 4B durch Schmieden. Aber auch eine Herstellung als Gussteil ist möglich, ebenso eine mechanische Bearbeitung der Schmiede- bzw. Gusskontur. Auch eine Herstellung aus Stangenmaterial ist möglich, z. B. bei einer Kleinserie.

Der Gelenkkern 5 ist das zentrale Element eines Elastomerlagers 10, zu dem ferner eine den Gelenkkern 5 umschließende und unmittelbar gegen den Gelenkkern abgestützte Elastomerschicht 11 und eine die Elastomerschicht 11 umschließende Schale 12 gehört. Die Außenseite 18 der Schale 12 ist vorzugsweise zylindrisch.

Bevorzugtes Material für den die Elastomerschicht 11 bildenden, buchsenfömigen Elastomerkörper ist Gummi. Jedoch ist je nach Einsatzgebiet auch ein synthetisches Elastomer geeignet, soweit dieses ein ausreichendes elastisches Verformungsverhalten verbunden mit ausreichender Rückverformung nach Auslenkung zeigt.

Gebildet wird die Elastomerschicht 11 durch den ringförmigen Elastomereinsatz, wobei dieser innen ballig gestaltet ist, so dass er mit der balligen Außenfläche des Gelenkkerns 5 unmittelbar und flächig verbunden ist. Diese Verbindung erfolgt zum Beispiel durch Aufvulkanisieren des Elastomereinsatzes auf die Außenfläche des Gelenkkerns 5.

Die Außenkontur der Elastomerschicht 11 ist auf einem Mittelabschnitt zylindrisch, hingegen auf jeweils anschließenden Endabschnitten konisch. Dementsprechend weist auch die Innenseite der die Elastomerschicht umschließenden Schale 12 konische Verengungen 13 auf.

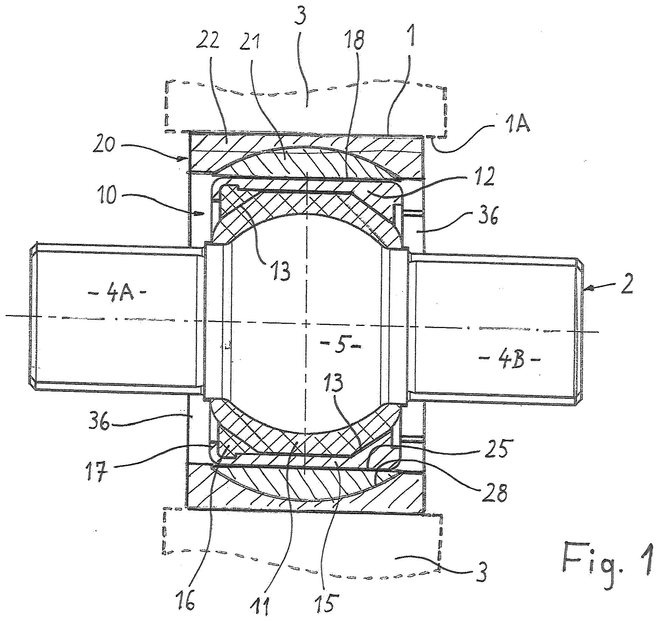

Die eine der beiden konischen Verengungen 13 befindet sich direkt an der vorzugsweise aus Metall bestehenden Schale 12. Die andere, in Fig. 1 links wiedergegebene Verengung 13 wird hingegen durch einen Ring 16 von im Wesentlichen dreieckigem Querschnitt erreicht. Der Ring 16, welcher aus Metall oder Kunststoff besteht, ist mit seiner ersten Seite gegen den Endabschnitt der Elastomerschicht 11, und mit seiner zweiten Seite radial und mit seiner dritten Seite axial gegen die Innenseite der Schale 12 abgestützt. Eine Seite des Rings 16 ist dabei von innen gegen eine Stirnwand 17 der Schale 12 axial abgestützt. Gefertigt ist diese Stirnwand 17, indem ein ursprünglich zylindrisch auslaufender Endbereich der Schale 12 über den gesamten Umfang nach radial innen umgebördelt ist, z. B. um 90°.

Zur Montage des Elastomerlagers 10 wird zunächst in einem Vulkanisationsprozess die Elastomerschicht 11 auf dem Gelenkkern 5 befestigt. Die Baueinheit aus Gelenkkern 5 und Elastomerschicht 11 wird dann von der einen Seite her in die Schale 12 hineingeschoben, wobei jener zylindrische Endabschnitt der Schale 12, der später die Stirnwand 17 bildet, noch offen ist. Sodann wird der Ring 16 eingesetzt und anschließend erfolgt die Umformung der Schale 12, indem deren noch zylindrischer Endabschnitt unter Bildung der Stirnwand 17 nach innen umgebördelt wird.

Entscheidend bei dem Elastomerlager 10 ist dessen durch die Verformbarkeit des Elastomereinsatzes erreichte Rückverformbarkeit. Um allerdings Spitzen bei den Rückstellkräften zu vermeiden, ist das Elastomerlager 10 um ein Gleitlager 20 ergänzt, wobei die Bauart dergestalt ist, dass das Gleitlager 20 radial außen, und das Elastomerlager 10 radial innen angeordnet ist.

Das Gleitlager 20 besteht aus einer sphärischen Kalotte 21, welche ringförmig ist, sowie aus einem ebenfalls ringförmigen Außenring 22. Der Außenring 22 ist außen zur Montage mit einer zylindrischen Mantelfläche versehen, die die Außenseite 1 des Außenrings 22 bildet. An seiner Innenseite ist der Außenring 22 als eine die Kalotte 21 frei drehbar, schwenkbar und weitgehend spielfrei aufnehmende, sphärische und konkave Gleitlagerschale 28 ausgebildet. Die Bestandteile des Gleitlagers 20, also die Kalotte 21 und der Außenring 22, können einzeln oder beide aus Kunststoff bestehen.

Die ringförmige und außen konvexe Kalotte 21 ist in ihrem Zentrum mit einer Durchgangsöffnung 25 versehen, die zylindrisch ist. Mit der Durchgangsöffnung 25 ist die Kalotte auf der Außenseite 18 der Schale 12 befestigt, vorzugsweise über eine Presspassung.

Die Längsachse des Gelenkkerns 5 führt durch den Radienmittelpunkt R der sphärischen Kalotte 21, und die zentrale Öffnungsachse der Durchgangsöffnung 25 der Kalotte 21 führt ebenfalls durch den Radienmittelpunkt R der Kalotte 21.

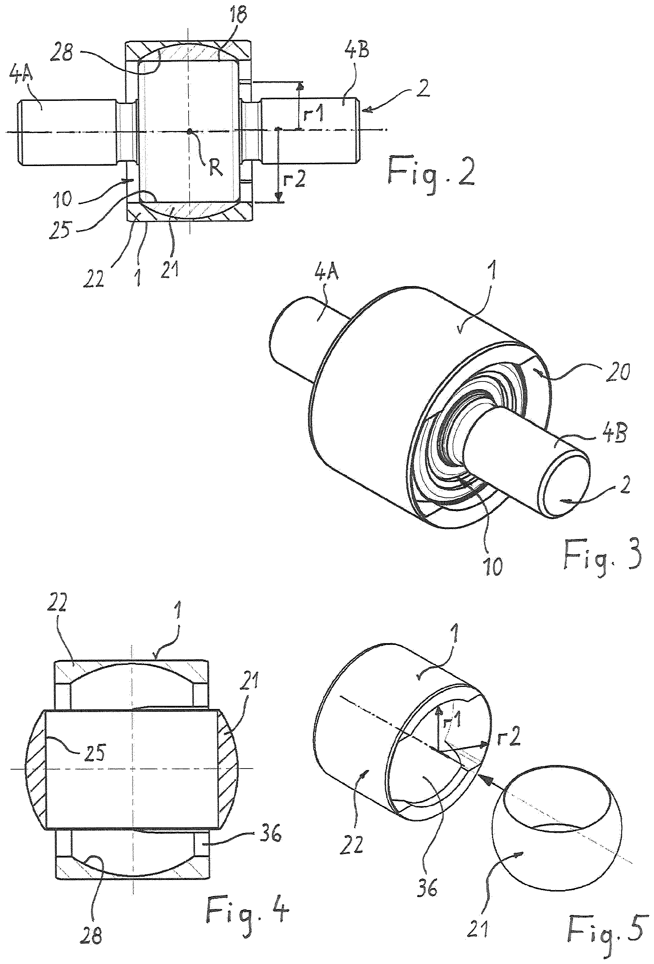

Das den Gelenkkern 5 beinhaltende Zentralelement 2 führt durch Öffnungen 36 in den beiden Stirnseiten des Außenrings 22 hindurch. Gemäß Fig. 5 ist die Öffnungskontur einer der beiden Öffnungen 36 segmentiert ausgebildet, wobei die Öffnungskontur auf zwei einander gegenüberliegenden Segmenten einen ersten Öffnungsradius r1, und auf den dazwischen angeordneten Segmenten einen demgegenüber größeren, zweiten Öffnungsradius r2 aufweist.

Dies ermöglicht trotz der sphärischen bzw. kalottenförmigen Bauweise eine einfache Montage der Kalotte 21 in der umgebenden sphärischen Gleitlagerschale 28 des Außenrings 22. Bei dieser Montage wird die Kalotte 21 gemäß den Figuren 4 und 5 um 90 ° verdreht bis in das Zentrum des Außenrings 22 hineingeschoben. Erst dann werden die beiden Achsen durch Zurückdrehen der Kalotte 21 wieder zueinander ausgerichtet. Erst wenn diese Montage der Kalotte 21 durch Einsetzen in den Außenring 22 abgeschlossen ist, wird das Elastomerlager 10 fest in der Durchgangsöffnung 25 der Kalotte 21 platziert, so dass ein anschließendes voneinander Lösen der sphärischen Bauteile des Gleitlagers 20 nicht mehr möglich ist, da diese ineinander gefangen sind.

Für die einfache und zuverlässige Montage des Gleitlagers 20 ist der zweite Öffnungsradius r2 an der Öffnung 36 des Außenrings 22 gleich oder größer als der Radius der Kalotte 21, wohingegen der erste Öffnungsradius r1 geringer als der Radius der Kalotte 21 ist. Der erste Öffnungsradius r1 ist größer als die Hälfte des maximalen Durchmessers der die Elastomerschicht 11 umschließenden Schale 12.

### Bezugszeichenliste

- 1: Außenseite
- 1A: Bohrung
- 3: Fahrwerksteil, Fahrzeug-Lenkerarm
- 2: Zentralelement
- 4 A: Befestigungszapfen
- 4 B: Befestigungszapfen
- 5: Gelenkkern
- 10: Elastomerlager
- 11: Elastomerschicht
- 12: Schale
- 13: Verengung
- 15: Gehäusemantel
- 16: Ring
- 17: Stirnwand
- 18: Außenseite
- 20: Gleitlager
- 21: Kalotte
- 22: Außenring
- 25: Durchgangsöffnung
- 28: Gleitlagerschale
- 36: Öffnung

- R: Radienmittelpunkt
- r1: Öffnungsradius
- r2: Öffnungsradius

## Patentansprüche

1. Gelenklager für die Abstützung eines Fahrzeug-Lenkerarms, mit
- einem Elastomerlager (10) aus einem starren Zentralelement (2), welches einstückig aus einem Gelenkkern (5) und mindestens einem in Verlängerung der Längsachse (A) des Gelenkkerns (5) angeordneten Befestigungszapfen (4A, 4B) besteht, einer den Gelenkkern (5) umschließenden und unmittelbar gegen den Gelenkkern (5) abgestützten Elastomerschicht (11), und einer die Elastomerschicht (11) umschließenden Schale (12),
- einem Gleitlager (20) aus einer sphärischen Kalotte (21), welche ringförmig mit einer Durchgangsöffnung (25) ausgebildet ist, und einem Außenring (22), welcher an seiner Innenseite als eine die Kalotte (21) frei drehbar aufnehmende, sphärische Gleitlagerschale (28) ausgebildet ist,
wobei die Schale (12) mit ihrer Außenseite (18) in der Durchgangsöffnung (25) der Kalotte (21) befestigt ist, und die Außenseite (1) des Außenrings (22) als eine in den Fahrzeug-Lenkerarm (3) einsetzbare Montagefläche ausgebildet ist.

2. Gelenklager nach Anspruch 1, **dadurch gekennzeichnet, dass** die Längsachse (A) des Gelenkkerns (5) durch den Radienmittelpunkt (R) der Kalotte (21) führt.

3. Gelenklager nach Anspruch 1 oder 2, **dadurch gekennzeichnet, dass** die Öffnungsachse der Durchgangsöffnung (25) der Kalotte (21) durch den Radienmittelpunkt (R) der Kalotte (21) führt.

4. Gelenklager nach einem der Ansprühe 1 bis 3, **dadurch gekennzeichnet, dass** das Zentralelement (2) durch Öffnungen (36) in den beiden Stirnseiten des Außenrings (22) hindurchführt, und dass die Öffnungskontur zumindest einer der Öffnungen (36) segmentiert ausgebildet ist, wobei die Öffnungskontur auf zwei einander gegenüberliegenden Segmenten einen ersten Öffnungsradius (r1) und auf den dazwischen angeordneten Segmenten einen demgegenüber größeren, zweiten Öffnungsradius (r2) aufweist.

5. Gelenklager nach Anspruch 4, **dadurch gekennzeichnet, dass** der zweite Öffnungsradius (r2) gleich oder größer als der Radius der Kalotte (21) ist, und dass der erste Öffnungsradius (r1) geringer als der Radius der Kalotte (21) ist.

6. Gelenklager nach Anspruch 4 oder 5, **dadurch gekennzeichnet, dass** der erste Öffnungsradius (r1) größer als die Hälfte des maximalen Durchmessers der Schale (12) ist.

7. Gelenklager nach einem der vorangehenden Ansprüche, **dadurch gekennzeichnet, dass** die Schale (12) als ein Gehäuse ausgebildet ist, welches aus einem Gehäusemantel (15), an dem sich die Außenseite (18) befindet, und aus in Richtung der Längsachse (A) weisenden Stirnwänden an beiden Enden des Gehäusemantels (15) besteht.

8. Gelenklager nach Anspruch 7, **dadurch gekennzeichnet, dass** das die Schale (12) bildende Gehäuse einschließlich der Stirnwände einstückig ausgebildet ist.

9. Gelenklager nach einem der vorangehenden Ansprüche, **gekennzeichnet durch** einen ballig, vorzugsweise sphärisch gestalteten Gelenkkern (5).

## Claims

1. Joint bearing for supporting a vehicle link arm, comprising
- an elastomer bearing (10) composed of a rigid central element (2), which consists integrally of a joint core (5) and at least one fastening peg (4A, 4B) arranged in the extension of the longitudinal axis (A) of the joint core (5), an elastomer layer (11) which encloses the joint core (5) and which is supported directly against the joint core (5), and a shell (12) which encloses the elastomer layer (11),
- a plain bearing (20) composed of a spherical dome (21), which is formed annularly with a passage opening (25), and an outer ring (22), which on its inner side is in the form of a spherical plain bearing shell (28) which receives the dome (21) in a freely rotatable manner,
wherein the shell (12) is fastened by way of its outer side (18) in the passage opening (25) of the dome (21), and the outer side (1) of the outer ring (22) is in the form of an installation surface which is insertable into the vehicle link arm (3).

2. Joint bearing according to Claim 1, **characterized in that** the longitudinal axis (A) of the joint core (5) runs through the radius central point (R) of the dome (21).

3. Joint bearing according to Claim 1 or 2, **characterized in that** the opening axis of the passage opening (25) of the dome (21) runs through the radius central point (R) of the dome (21).

4. Joint bearing according to one of Claims 1 to 3, **characterized in that** the central element (2) runs through openings (36) in the two end sides of the outer ring (22), and **in that** the opening contour of at least one of the openings (36) is of segmented form, wherein the opening contour has a first opening radius (r1) on two mutually opposite segments and a second opening radius (r2), which is larger than the first opening radius, on the segments arranged therebetween.

5. Joint bearing according to Claim 4, **characterized in that** the second opening radius (r2) is equal to or greater than the radius of the dome (21), and **in that** the first opening radius (r1) is smaller than the radius of the dome (21).

6. Joint bearing according to Claim 4 or 5, **characterized in that** the first opening radius (r1) is greater than half the maximum diameter of the shell (12).

7. Joint bearing according to one of the preceding claims, **characterized in that** the shell (12) is in the form of a housing which consists of a housing sheath (15), on which the outer side (18) is located, and of end walls which point in the direction of the longitudinal axis (A) at both ends of the housing sheath (15).

8. Joint bearing according to Claim 7, **characterized in that** the housing, including the end walls, which forms the shell (12) is of integral form.

9. Joint bearing according to one of the preceding claims, **characterized by** a joint core (5) of crowned, preferably spherical, design.

## Revendications

1. Palier de pivotement pour le support d'un bras de suspension de véhicule, avec
- un palier en élastomère (10) composé d'un élément central rigide (2) qui est constitué d'une seule pièce d'un noyau de pivotement (5) et d'au moins un tourillon de fixation (4A, 4B) agencé dans le prolongement de l'axe longitudinal (A) du noyau de pivotement (5), d'une couche d'élastomère (11) entourant le noyau de pivotement (5) et s'appuyant directement contre le noyau de pivotement (5), et d'une coque (12) entourant la couche d'élastomère (11),
- un palier lisse (20) composé d'une calotte sphérique (21), qui est réalisée en forme d'anneau avec une ouverture de passage (25), et d'une bague extérieure (22), qui est réalisée sur son côté intérieur sous la forme d'une coque de palier lisse sphérique (28) recevant la calotte (21) de manière librement rotative,
la coque (12) étant fixée par son côté extérieur (18) dans l'ouverture de passage (25) de la calotte (21), et le côté extérieur (1) de la bague extérieure (22) étant réalisé sous la forme d'une surface de montage pouvant être insérée dans le bras de suspension de véhicule (3).

2. Palier de pivotement selon la revendication 1, **caractérisé en ce que** l'axe longitudinal (A) du noyau de pivotement (5) passe par le centre des rayons (R) de la calotte (21).

3. Palier de pivotement selon la revendication 1 ou 2, **caractérisé en ce que** l'axe d'ouverture de l'ouverture de passage (25) de la calotte (21) passe par le centre des rayons (R) de la calotte (21).

4. Palier de pivotement selon l'une quelconque des revendications 1 à 3, **caractérisé en ce que** l'élément central (2) traverse des ouvertures (36) dans les deux côtés frontaux de la bague extérieure (22), et **en ce que** le contour d'ouverture d'au moins l'une des ouvertures (36) est réalisé sous forme segmenté, le contour d'ouverture présentant un premier rayon d'ouverture (r1) sur deux segments opposés l'un à l'autre et un deuxième rayon d'ouverture (r2) plus grand par rapport à celui-ci sur les segments agencés entre eux.

5. Palier de pivotement selon la revendication 4, **caractérisé en ce que** le deuxième rayon d'ouverture (r2) est égal ou supérieur au rayon de la calotte (21), et **en ce que** le premier rayon d'ouverture (r1) est inférieur au rayon de la calotte (21).

6. Palier de pivotement selon la revendication 4 ou 5, **caractérisé en ce que** le premier rayon d'ouverture (r1) est supérieur à la moitié du diamètre maximal de la coque (12) .

7. Palier de pivotement selon l'une quelconque des revendications précédentes, **caractérisé en ce que** la coque (12) est réalisée sous la forme d'un boîtier constitué d'une enveloppe de boîtier (15), sur laquelle se trouve le côté extérieur (18), et de parois frontales orientées dans la direction de l'axe longitudinal (A) aux deux extrémités de l'enveloppe de boîtier (15).

8. Palier de pivotement selon la revendication 7, **caractérisé en ce que** le boîtier formant la coque (12), y compris les parois frontales, est réalisé d'une seule pièce.

9. Palier de pivotement selon l'une quelconque des revendications précédentes, **caractérisé par** un noyau de pivotement (5) conçu sous forme bombée, de préférence sphérique.
